(19) **Europäisches Patentamt / European Patent Office / Office européen des brevets**

(11) **EP 3 098 706 A1**

(12) **EUROPEAN PATENT APPLICATION**

(43) Date of publication:
**30.11.2016 Bulletin 2016/48**

(51) Int Cl.:
**G06F 3/12** (2006.01)     **G06F 17/24** (2006.01)
**G06Q 10/10** (2012.01)

(21) Application number: **16156243.4**

(22) Date of filing: **18.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.05.2015 JP 2015106540**

(71) Applicant: **Fuji Xerox Co., Ltd.**
**Minato-ku,**
**Tokyo (JP)**

(72) Inventor: **DAI, Jiahao**
**Yokohama-shi, Kanagawa (JP)**

(74) Representative: **Ward, James Norman et al**
**Haseltine Lake LLP**
**Bürkleinstrasse 10**
**80538 München (DE)**

(54) **INFORMATION PROCESSING APPARATUS, INFORMATION PROCESSING METHOD, AND PROGRAM**

(57)     An information processing apparatus includes a setting unit, an execution unit a storage unit, and a control unit. The setting unit sets a series of processing operations to be executed in relation to a document. The execution unit executes the set series of processing operations. The storage unit stores the document and information indicating a situation of the series of processing operations executed by the execution unit in association with each other. The control unit performs control so that the document on which the information indicating the situation of the series of processing operations is superposed as viewable image information will be displayed upon receiving an instruction to display the document.

FIG. 1

**Description**

BACKGROUND

1. Technical Field

The present invention relates to an information processing apparatus, an information processing method, and a program.

2. Related Art

Patent Literature 1 (JP-A-2006-228131) discloses a technique that has a purpose to improve operability when performing arbitrary processing on an arbitrary part of a plurality of page data appended with annotation data, displays an annotation list in which a type of the annotation data, a page number of the page data appended with the annotation data, and content of the annotation data are correlated with each other and displayed, on a display, and performs the selected processing content on the page data appended with the selected annotation data when the annotation data and the processing content are selected in the annotation list and annotation selection data and processing selection data are input.

Patent Literature 2 (JP-A-2006-268703) discloses a technique that has a purpose to provide a document management system which realizes simplification of job execution in status change such as "three copy printing of a collection approval document" or "mail delivery to the following worker", adds job information within the document management system to an annotation as additional information, and executes a job when the annotation is added to a document, in a case where a workflow is realized.

SUMMARY

However, in a case where a series of processing operations using the document is executed, it is necessary that the operation displaying attribute information relating to the processing is performed separately from the operation displaying the content of the document, so as to check a situation of the series of processing operations.

In view of above, an object of the invention is to provide an information processing apparatus, an information processing method and a program capable of checking both of the content of the document and the situation of the series of processing operations with little trouble, compared to a case where the operation displaying the content of the document is performed separately from the operation displaying the attribute information indicating a situation of the series of processing operations associated with the document.

[1] According to an aspect of the invention provides an information processing apparatus including a setting unit, an execution unit a storage unit, and a control unit. The setting unit sets a series of processing operations to be executed in relation to a document. The execution unit executes the set series of processing operations. The storage unit stores the document and information indicating a situation of the series of processing operations executed by the execution unit in association with each other. The control unit performs control so that the document on which the information indicating the situation of the series of processing operations is superposed as viewable image information will be displayed upon receiving an instruction to display the document.

[2] It may be the information processing apparatus according to [1], in which the viewable image information is an annotation, and the viewable image information is superposed on the document by appending the annotation to the document.

[3] It may be the information processing apparatus according to [2], in which the annotation is generated when each of the series of processing operations has been completed or when an instruction to display the document is given from a user.

[4] It may be the information processing apparatus according to [2], in which the annotation is appended to the document when each of the series of processing operations has been completed or when an instruction to display the document is given from a user.

[5] It may be the information processing apparatus according to any one of [1] to [4], in which: the storage unit stores the document and image information indicating the situation of the series of processing operations in association with each other; and the control unit performs control so that the image information will be superposed on the document in accordance with an instruction to display the document from a user.

[6] It may be the information processing apparatus according to [1] or [2], in which the control unit performs control so that an annotation will be generated from the information indicating the situation of the series of processing operations and will be superposed on the document in accordance with an instruction to display the document from a user.

[7] It may be the information processing apparatus according to any one of [1] to [6], in which the control unit performs control so that a mode of the viewable image information to be superposed on the document and to be displayed will be varied in accordance with a progress of the series of processing operations.

[8] It may be the information processing apparatus according to any one of [1] to [7], in which the control unit performs control so that a position on the document at which the viewable image information is superposed will be varied in accordance with a progress of the series of processing operations.

[9] It may be the information processing apparatus according to any one of [1] to [8], in which the control unit performs control so that the viewable image information will not be superposed on the document and displayed after the series of processing operations has been completed.

[10] It may be the information processing apparatus according to any one of [1] to [9], in which: the series of processing operations is approval processing for the document; and the control unit performs control so that, if the document has not been approved by a user executing the series of processing operations, image information indicating that the document has not been approved will be superposed on the document and displayed.

[11] Another aspect of the invention provides an information processing method including: setting a series of processing operations to be executed in relation to a document; executing the set series of processing operations; storing the document and information indicating a situation of the series of processing operations in association with each other; and performing control so that the document on which the information indicating the situation of the series of processing operations is superposed as viewable image information will be displayed upon receiving an instruction to display the document.

[12] A program causing a computer to function as: a setting unit that sets a series of processing operations to be executed in relation to a document; an execution unit that executes the set series of processing operations; a storage unit that stores the document and information indicating a situation of the series of processing operations executed by the execution unit in association with each other; and a control unit that performs control so that the document on which the information indicating the situation of the series of processing operations is superposed as viewable image information will be displayed upon receiving an instruction to display the document.

According to the information processing apparatus of [1] and the information processing method of [11], it is possible to check both of the content of the document and the situation of the series of processing operations with little trouble, compared to a case where the operation displaying the content of the document is performed separately from the operation displaying the attribute information indicating the situation of the series of processing operations associated with the document.

According to the information processing apparatus of [2], it is possible to realize superposing of the document and the image information by appending the annotation to the document.

According to the information processing apparatus of [3] and [4], it is possible to set the timing at which the annotation is generated or the annotation is appended to the document, to a time point when each of the series of processing operations has been completed or the instruction to display the document is given from the user.

According to the information processing apparatus of [5], it is possible to perform superposing of the document and the image information in response to the instruction to display the document from the user.

According to the information processing apparatus of [6], it is possible to perform superposing of the document and the image information by generating the corresponding annotation from information indicating the situation of the series of processing operations and by superposing the generated annotation on the document in response to the instruction to display the document from the user.

According to the information processing apparatus of [7], it is possible to perform control so that the mode of the image information to be superposed on the document and to be displayed varies in accordance with the progress of the series of processing operations.

According to the information processing apparatus of [8], it is possible to perform control so that the position on the document at which the image information is superposed varies in accordance with the progress of the series of processing operations.

According to the information processing apparatus of [9], it is possible to perform control so that the image information is not superposed on the document and displayed after the series of processing operations has been completed.

According to the information processing apparatus of [10], it is possible to perform control so that the image information indicating that the document has not been approved is superposed on the document and displayed, in a case where approval processing for the document is performed and the document has not been approved by the user.

According to the program of [12], it is possible to check both of the content of the document and the situation of the series of processing operations with little trouble, compared to a case where the operation displaying the content of the document is performed separately from the operation displaying the attribute information indicating the situation of the series of processing operations associated with the document.

BRIEF DESCRIPTION OF THE DRAWINGS

An exemplary embodiment of the present invention will be described in detail based on the following figures, wherein:

Fig. 1 is a block diagram illustrating conceptual modules forming an example of the configuration of an exemplary embodiment;
Fig. 2 illustrates an example of a system configuration utilizing an exemplary embodiment;
Fig. 3 is a flowchart illustrating an example of processing according to an exemplary embodiment;
Fig. 4 illustrates an example of the data structure of a job-and-template-annotation association table;
Fig. 5 illustrates an example of the data structure of a template annotation attribute information table;
Figs. 6 through 9 illustrate flowcharts illustrating examples of processing according to an exemplary embodiment;
Figs. 10 and 11 illustrate examples of processing according to an exemplary embodiment;
Fig. 12 illustrates an example of the data structure of a job-and-template-annotation association table;
Fig. 13 illustrates an example of the data structure of a template annotation attribute information table;
Fig. 14 illustrates an example of the data structure of an annotation attribute information table;
Figs. 15 through 16B illustrate examples of processing according to an exemplary embodiment;
Fig. 17 illustrates an example of the data structure of a job attribute information table;
Fig. 18 illustrates an example of the data structure of an annotation attribute information table;
Fig. 19 illustrates an example of the data structure of a progress-ratio-and-annotation-appending-page association table;
Figs. 20A through 23 illustrate examples of processing according to an exemplary embodiment; and
Fig. 24 is a block diagram illustrating an example of the hardware configuration of a computer implementing an exemplary embodiment.

DETAILED DESCRIPTION

An exemplary embodiment of the invention will be described below with reference to the accompanying drawings.

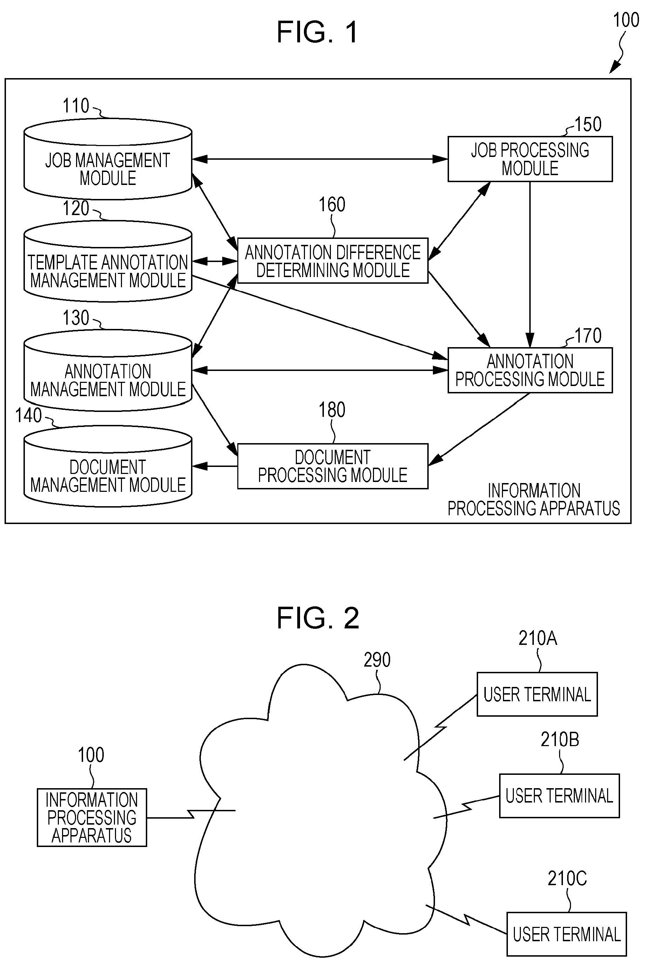

Fig. 1 is a block diagram illustrating conceptual modules forming an example of the configuration of the exemplary embodiment of the invention.
Generally, modules are software (computer programs) components or hardware components that can be logically separated from one another. Accordingly, the modules of the exemplary embodiment of the invention are not only modules of a computer program, but also modules of a hardware configuration. Thus, the exemplary embodiment will also be described in the form of a computer program for allowing a computer to function as those modules (a program for causing a computer to execute program steps, a program for allowing a computer to function as corresponding units, or a computer program for allowing a computer to implement corresponding functions), a system, and a method. While expressions such as "store", "storing", "being stored", and equivalents thereof are used for the sake of description, such expressions indicate, when the exemplary embodiment relates to a computer program, storing the computer program in a storage device or performing control so that the computer program is stored in a storage device. Modules may correspond to functions based on a one-to-one relationship. In terms of implementation, however, one module may be constituted by one program, or plural modules may be constituted by one program. Conversely, one module may be constituted by plural programs. Additionally, plural modules may be executed by using a single computer, or one module may be executed by using plural computers in a distributed or parallel environment. One module may integrate another module therein. Hereinafter, the term "connection" includes not only physical connection, but also logical connection (sending and receiving of data, giving instructions, reference relationships among data elements, etc.). The term "predetermined" means being determined prior to a certain operation, and includes the meaning of being determined prior to a certain operation before starting processing of the exemplary embodiment, and also includes the meaning of being determined prior to a certain operation even after starting processing of the exemplary embodiment, in accordance with the current situation/state or in accordance with the previous situation/state. If there are plural "predetermined values", they may be different values, or two or more of the values (or all the values) may be the same. A description having the meaning "in the case of A, B is performed" is used as the meaning "it is determined whether the case A is satisfied, and B is performed if it is determined that the case A is satisfied", unless such a determination is necessary.
A system or an apparatus may be realized by connecting plural computers, hardware units, devices, etc., to one another via a communication medium, such as a network (including communication based on a one-to-one correspondence), or may be realized by a single computer, hardware unit, device, etc. The terms "apparatus" and "system" are used synonymously. The term "system" does not include merely a man-made social "mechanism" (social system).

Additionally, every time an operation is performed by using a corresponding module or every time each of plural operations is performed by using a corresponding module, target information is read from a storage device, and after performing the operation, a processed result is written into the storage device. Accordingly, a description of reading from the storage device before an operation or writing into the storage device after an operation may be omitted. Examples of the storage device may be a hard disk (HD), a random access memory (RAM), an external storage medium, a storage device using a communication line, a register within a central processing unit (CPU), etc.

An information processing apparatus 100 according to the exemplary embodiment executes a series of processing operations to be executed in relation to a document. As shown in Fig. 1, the information processing apparatus 100 includes a job management module 110, a template annotation management module 120, an annotation management module 130, a document management module 140, a job processing module 150, an annotation difference determining module 160, an annotation processing module 170, and a document processing module 180.

An example of the series of processing operations to be executed in relation to a document (also called a workflow, job, or action) is approval processing (also called reviewing), which is an activity for determining the appropriateness, adequacy, and effectiveness of items to be studied for achieving a set target. An example of the state of a workflow is, for example, in the above-described document review, how far a document has been checked or what kind of result has been obtained.

Documents are, in most cases, text data, or may be electronic data (also called files), such as graphics, images, video, and sound, or a combination of text data and electronic data. Documents are objects that may be stored, edited, and searched for, and may be shared among systems and users as individual units, or are similar to such objects. More specifically, documents may include documents and web pages created by a document creation program.

The job processing module 150 is connected to the job management module 110, the annotation difference determining module 160, and the annotation processing module 170. The job processing module 150 sets a series of processing operations to be executed in relation to a document, and executes the set series of processing operations. More specifically, the job processing module 150 processes a job and, if there is a change in the state of a job in accordance with the processing of the job, the job processing module 150 causes the annotation difference determining module 160 to determine a difference between the job and an annotation.

The annotation difference determining module 160 is connected to the job management module 110, the template annotation management module 120, the annotation management module 130, the job processing module 150, and the annotation processing module 170. The annotation difference determining module 160 compares the situation of processing indicated by image information which is already associated with a document with the current situation of the processing. If the two situations are different from each other, the annotation difference determining module 160 performs control so that the annotation processing module 170 will create or process image information by reflecting the current situation of the processing. More specifically, the annotation difference determining module 160 refers to attribute information stored in the job management module 110 and that stored in the annotation management module 130 and determines whether or not there is a difference in the state between a subject annotation and a job.

The annotation processing module 170 is connected to the template annotation management module 120, the annotation management module 130, the job processing module 150, the annotation difference determining module 160, and the document processing module 180. The annotation processing module 170 stores a document and information indicating the situation of a series of processing operations related to this document and executed by the job processing module 150 in association with each other. More specifically, the annotation processing module 170 processes (or creates) an annotation on the basis of attribute information stored in the template annotation management module 120 and that in the annotation management module 130. The above-described information indicating the situation of a series of processing operations may be image information constituted by an image. Then, the annotation processing module 170 may store a document and image information indicating the situation of the series of processing operations in association with each other.

The annotation processing module 170 may perform control so that the mode of image information to be superposed on a document will be varied in accordance with the progress of the series of processing operations. Examples of the mode of image information are the size, shape, design, color, degree of filling, blinking, appending position, a combination thereof, or a mode in which these elements dynamically change (such as flashing and animation). In the case of blinking, the annotation processing module 170 performs control to determine whether or not image information will be caused to blink, or it performs control so that the period or interval for which the image information blinks will be changed.

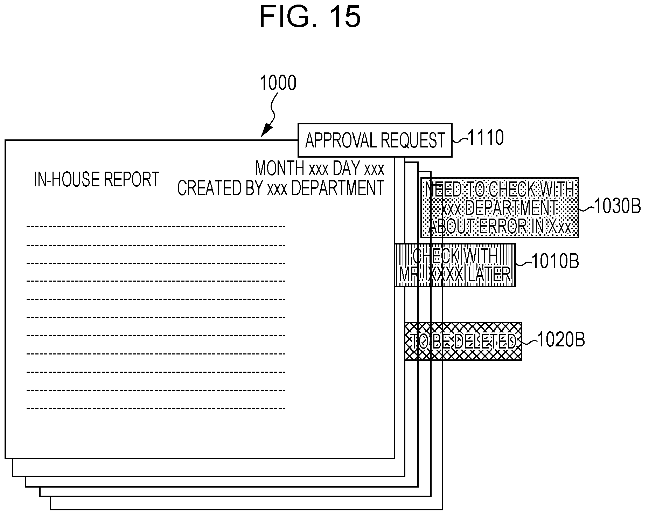

The document processing module 180 is connected to the annotation management module 130, the document management module 140, and the annotation processing module 170. The document processing module 180 performs control so that a document on which information indicating the situation of a series of processing operations is superposed as viewable image information will be displayed upon receiving an instruction to display a document. Superposing of a document and image information may be performed by appending an annotation to a document. An annotation is information appended to a document. For example, an annotation is appended in the form of, for example, an electronic tag, to a document, and may be added, deleted, moved to another position by a user operation. The content of annotation indicated in an electronic tag may also be added, changed, and deleted by a user operation. In an annotation, a series of processing operations to be executed in relation to a document to which this annotation is appended may be set, which will be discussed later with reference to, for example, Fig. 15. In this annotation, image information indicating the situation of the set series of processing operations may be indicated.

More specifically, the document processing module 180 performs processing, such as addition (appending), replacement, and deletion of a subject annotation on a document. The document processing module 180 then stores the document in the document management module 140 and the annotation associated with this document in the annotation management module 130. The document processing module 180 may store a document appended with an annotation in the document management module 140.

The timing at which an annotation is generated or an annotation is appended to a document may be a time point when each of a series of processing operations has been completed or an instruction to display a document is given from a user.

Superposing of a document and image information may be performed in response to an instruction to display a document from a user.

Superposing of a document and image information may be performed by generating an annotation from information indicating the situation of a series of processing operations and by superposing the generated annotation on the document in response to an instruction to display a document from a user.

The document processing module 180 may perform control so that the position on a document at which image information is superposed will be varied in accordance with the progress of a series of processing operations.

The document processing module 180 may perform control so that image information will not be superposed on a document and displayed after a series of processing operations has been completed.

If a series of processing operations is approval processing for a document and if the document has not been approved by a user executing the series of processing operations, the document processing module 180 may perform control so that image information indicating that the document has not been approved will be superposed on the document and be displayed.

The document processing module 180 may perform control so that an annotation associated with a document by a user operation and an annotation created by the annotation processing module 170 will be displayed such that they are distinguishable from each other.

The job management module 110 is connected to the job processing module 150 and the annotation difference determining module 160. The job management module 110 manages the following two items of information:

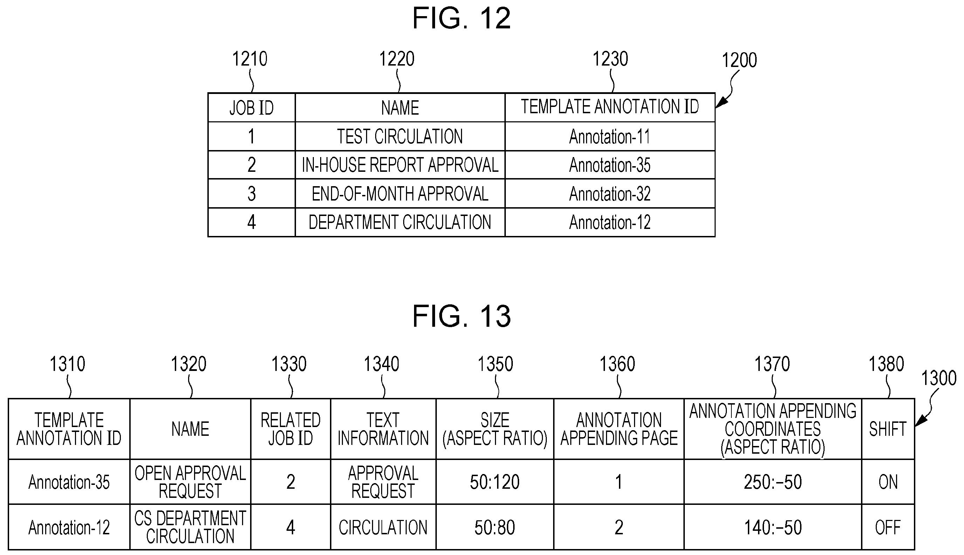

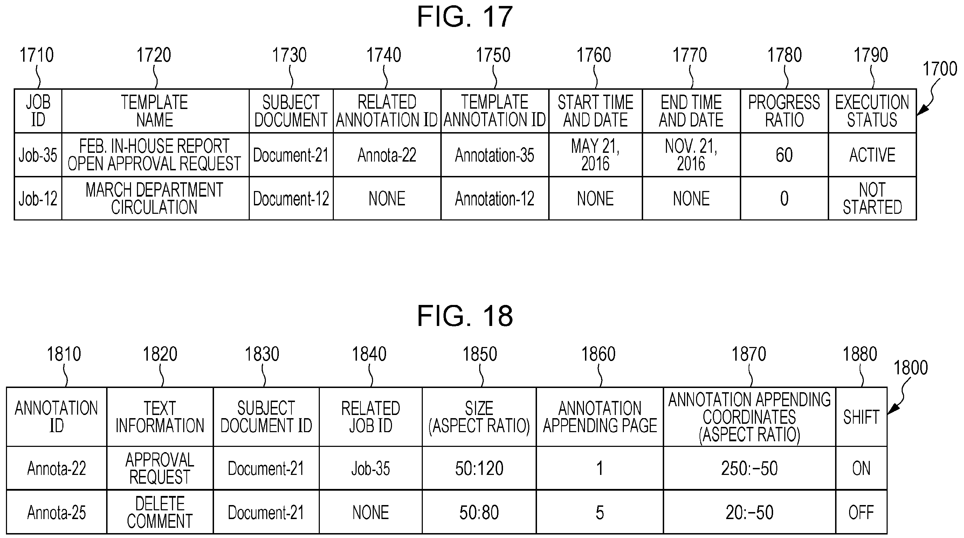

1) attribute information concerning a job, such as a job ID, name, subject document, related annotation ID, template annotation ID, job start time and date, job end time and date, progress ratio, and execution status (which will be discussed later with reference to Fig. 17); and
2) template information used for appending an annotation at the time of starting of a job, such as a job ID, name, and a template annotation ID (which will be discussed later with reference to Fig. 12).

The template annotation management module 120 is connected to the annotation difference determining module 160 and the annotation processing module 170. The template annotation management module 120 manages the following two items of information:

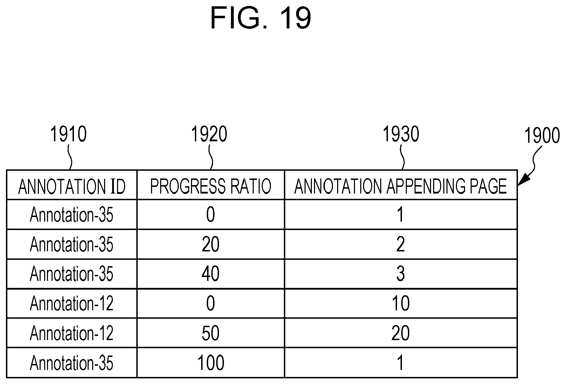

1) attribute information concerning a template annotation, such as a template annotation ID, name, related job ID, text information, size (aspect ratio), page of a document to which a template annotation is appended (hereinafter may be referred to as an "annotation appending page"), coordinates (aspect ratio) of a document to which a template annotation is appended (hereinafter may be referred to as "annotation appending coordinates"), and whether or not an annotation may shift to another page (which will be discussed later with reference to Fig. 13); and
2) association information concerning the association between the progress ratio of a job and an annotation appending page used for shifting an annotation, such as a template annotation ID, job progress ratio, and annotation appending page (which will be discussed later with reference to Fig. 19).

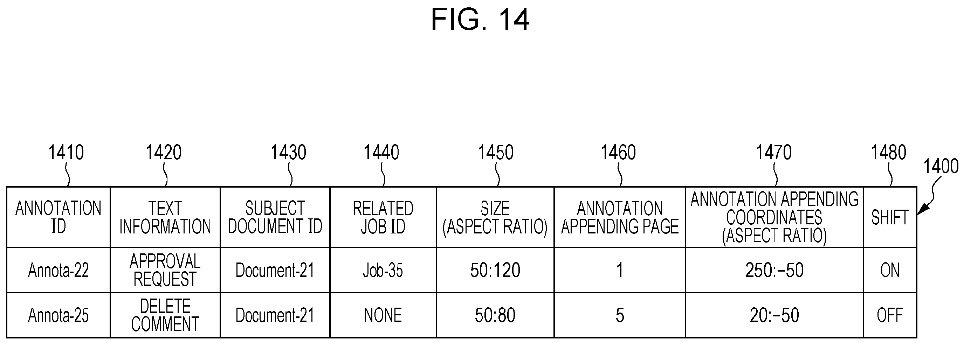

The annotation management module 130 is connected to the annotation difference determining module 160, the annotation processing module 170, and the document processing module 180. The annotation management module 130 records annotation attribute information therein. Examples of annotation attribute information are an annotation ID, text information, subject document ID, related job ID, size (aspect ratio), annotation appending page, annotation appending coordinates (aspect ratio), and whether or not an annotation may shift to another page (which will be discussed later with reference to Fig. 14).

The document management module 140 is connected to the document processing module 180. The document management module 140 records documents stored in the information processing apparatus 100 therein.

Fig. 2 illustrates an example of a system configuration utilizing the information processing apparatus 100 of the exemplary embodiment.

The information processing apparatus 100 and user terminals 210A, 210B, and 210C are connected to each other via a communication network 290. The communication network 290 may be a wireless or wired medium, or a combination thereof, and may be, for example, the Internet or an intranet as a communication infrastructure. Hereinafter, the user terminals 210A through 210C will be simply referred to as the "user terminal 210" unless it is necessary to distinguish them from each other. The user terminal 210 is operated by a user and performs the following processing operations: registering a document in the information processing apparatus 100; adding an annotation to a document stored in the information processing apparatus 100 or editing an annotation; adding a job to a document stored in the information processing apparatus 100 or editing a job; adding a template annotation to the information processing apparatus 100 or editing a template annotation; and displaying a document stored in the information processing apparatus 100. When a document is displayed, if a job associated with this document is still in progress, the processing situation is indicated in an annotation appended to this document. The processing situation is a so-called progress situation (including a status), and more specifically, information that the job is active or is suspended, and the progress degree of the job is indicated.

That is, the user terminal 210 is able to append an annotation to a document and set a specific operation as a job. For example, by setting a job, the user terminal 210 is able to automatically supply information by email and to change attributes or authorization. By relating an annotation and a job to each other and by appending the annotation to a document, the user terminal 210 is able to set the job in the document and to execute the job.

Then, the information processing apparatus 100 automatically generates an annotation and appends it to the document in accordance with the status of the job set in the document.

If the status of the job related to the annotation is changed, the mode of the annotation appended to the document is changed.

Upon completion of the job, the annotation is changed or deleted.

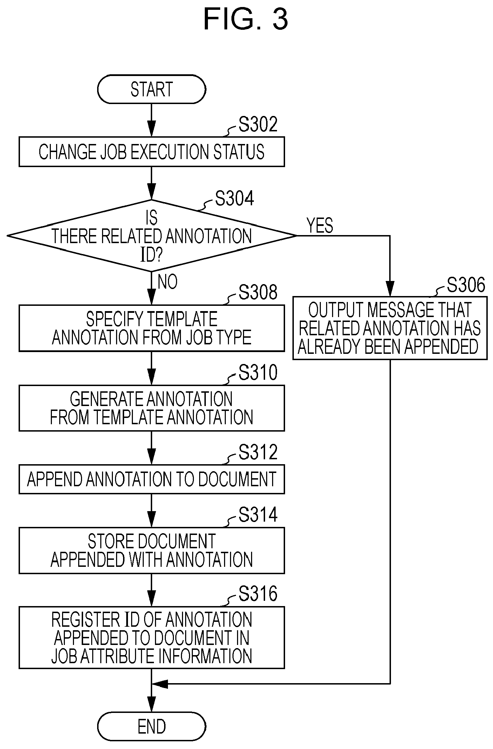

Fig. 3 is a flowchart illustrating an example of job start processing according to the exemplary embodiment, and more specifically, a processing flow for appending an annotation to a document at the start of a job.

In step S302, the job processing module 150 changes the execution status of a job. More specifically, the job processing module 150 changes the execution status of a job to "active" in accordance with the start of the job.

In step S304, the annotation difference determining module 160 determines from attribute information concerning the job whether or not there is a related annotation ID. If there is a related annotation ID (that is, if the same annotation is already appended to a subject document), the process proceeds to step S306. If there is no related annotation ID, the process proceeds to step S308. More specifically, in step S304, the annotation difference determining module 160 refers to the related annotation ID, which is one item of the attribute information concerning the job, so as to check for a related annotation. If there is a related annotation, the process proceeds to step S306. In step S306, the document processing module 180 outputs a message indicating that a related annotation has already been appended to the subject document, and the processing is terminated. If there is no related annotation, the process proceeds to step S308. In step S308, the annotation processing module 170 specifies a template annotation from the job type.

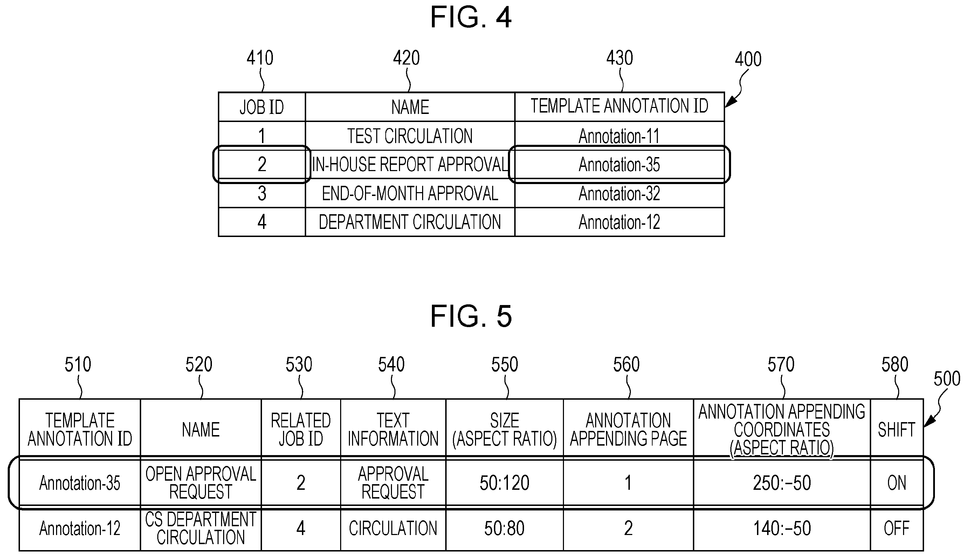

More specifically, in step S308, the annotation processing module 170 specifies, from the job type, an annotation in a template used for automatically generating an annotation by using a job-and-template-annotation association table 400. Fig. 4 illustrates an example of the data structure of the job-and-template-annotation association table 400. The job-and-template-annotation association table 400 has a job ID column 410, a name column 420, and a template annotation ID column 430. In the exemplary embodiment, in the job ID column 410, information for uniquely identifying a job (job identification) is stored. In the name column 420, the name of a job is stored. In the exemplary embodiment, in the template annotation ID column 430, information for uniquely identifying a template annotation (template annotation ID) is stored. For example, as shown in Fig. 4, if the subject job ID is "2", the template annotation ID is specified as "Annotation-35".

In step S310, the annotation processing module 170 generates an annotation from the template annotation. More specifically, the annotation processing module 170 generates an annotation on the basis of the template annotation specified in step S308. Fig. 5 illustrates an example of the data structure of a template annotation attribute information table 500. The template annotation attribute information table 500 includes a template annotation ID column 510, a name column 520, a related job ID column 530, a text information column 540, a size (aspect ratio) column 550, an annotation appending page column 560, an annotation appending coordinate (aspect ratio) column 570, and a shift column 580. In the template annotation ID column 510, a template annotation ID is stored. In the name column 520, the name of a template annotation is stored. In the related job ID column 530, the job ID related to a template annotation is stored. In the text information column 540, text information to be indicated in a template annotation (text information to be indicated in an electronic tag) is stored. In the size (aspect ratio) column 550, the size (aspect ratio) of a template annotation (size of an electronic tag) is stored. In the annotation appending page column 560, the page of a document to which a template annotation will be appended (page number to which an electronic tag will be appended) is stored. In the annotation appending coordinate (aspect ratio) column 570, the coordinates (aspect ratio) to which a template annotation will be appended (coordinates within a page to which an electronic tag will be appended) is stored. In the shift column 580, information (shift ON/OFF) indicating whether or not the position at which a template annotation is appended may be changed according to the situation is stored. In this case, this information indicates whether or not the position at which a template annotation is appended may be changed to a different page or to different coordinates within the same page. For example, as shown in Fig. 5, the template annotation ID "Annotation-35" specified in step S308 corresponds to the first row of the template annotation attribute information table 500. That is, concerning the annotation "open approval request", the related job ID is "2", "approval request" is indicated in an electronic tag, the size of the electronic tag is "50:120", the annotation will be appended to the coordinates at "250:-50" of the first page, and the position at which a template annotation is appended may be changed according to the situation.

In step S312, the document processing module 180 appends the annotation generated in step S310 to the document.

In step S314, the document processing module 180 stores the document to which the annotation is appended in step S312 in the document management module 140.

In step S316, the annotation processing module 170 registers the ID of the annotation appended to the document in the job attribute information. More specifically, the annotation processing module 170 registers the ID of the annotation appended to the document in step S312 as the related annotation ID, which is one item of the job attribute information.

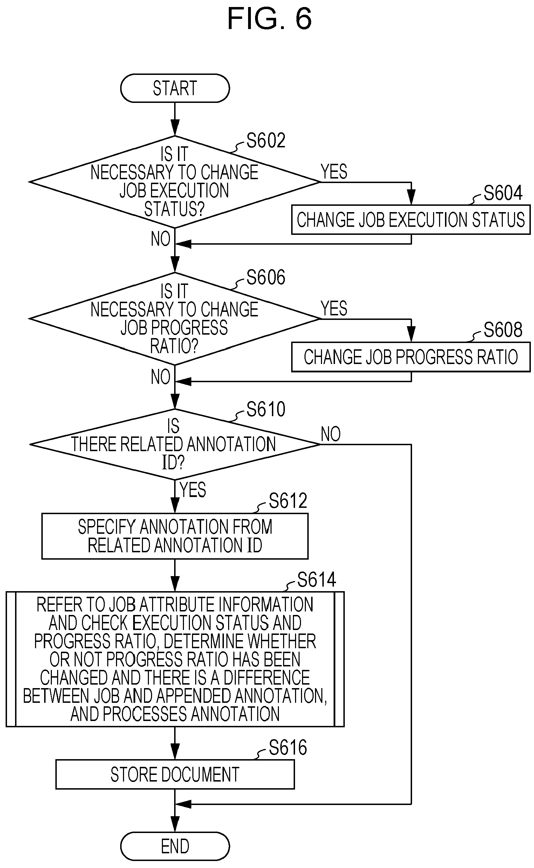

Fig. 6 is a flowchart illustrating an example of job status changing processing according to the exemplary embodiment. More specifically, Fig. 6 is a processing flow for replacing an annotation appended to a document by a new one when the job status is changed.

In step S602, the job processing module 150 determines whether or not it is necessary to change the job execution status. If the result of step S602 is YES, the process proceeds to step S604. In step S604, the job execution status is changed. If the result of step S602 is NO, the process proceeds to step S606.

More specifically, in step S604, the job processing module 150 changes the execution status, which is one item of the job attribute information.

In step S606, the job processing module 150 determines whether or not it is necessary to change the progress ratio, which is one item of the job attribute information. If the result of step S606 is YES, the process proceeds to step S608. In step S608, the job processing module 150 changes the job progress ratio. If the result of step S606 is NO, the process proceeds to step S610.

In step S610, the annotation difference determining module 160 determines from the job attribute information whether or not there is a related annotation ID. If the result of step S610 is YES, the process proceeds to step S612. If the result of step S610 is NO, the processing is terminated. More specifically, in step S610, the annotation difference determining module 160 refers to the related annotation ID, which is one item of the job attribute information, so as to check for a related annotation. If there is a related annotation ID, the process proceeds to step S612. In step S612, the annotation difference determining module 160 specifies an annotation from the related annotation ID. If there is no related annotation, the processing is terminated.

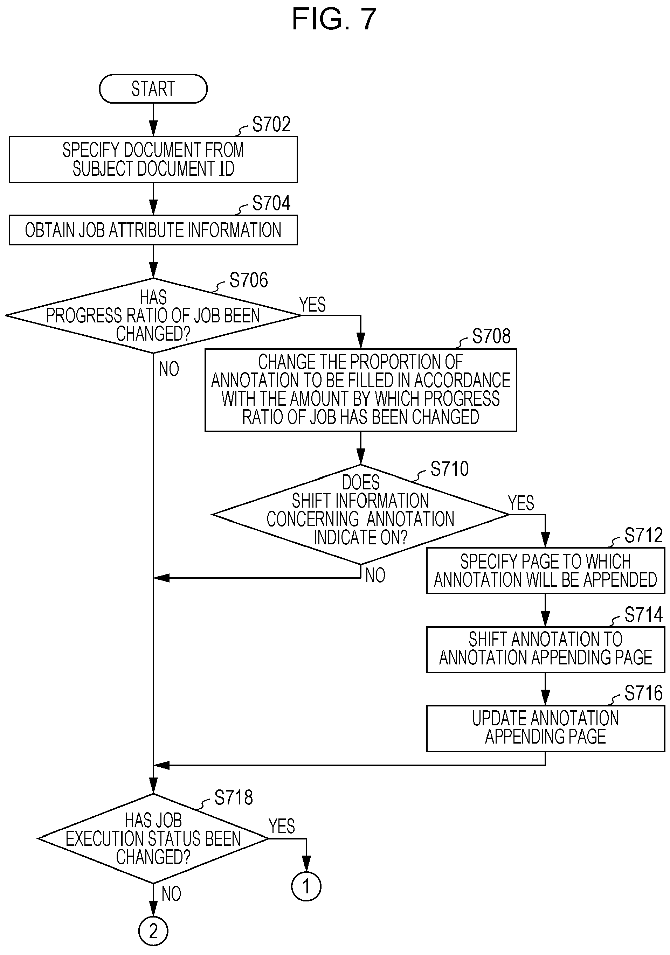

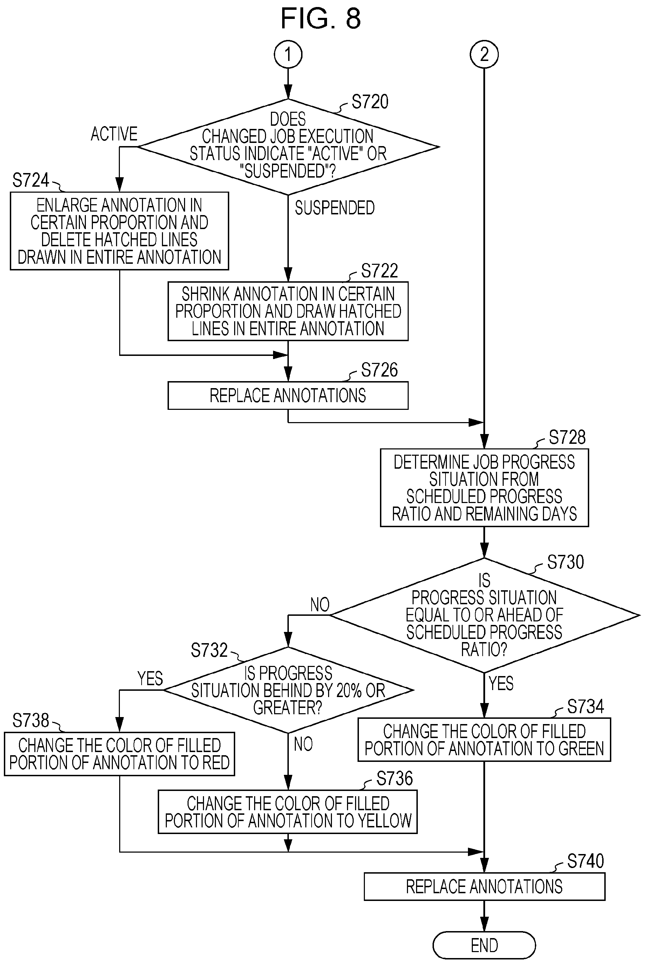

In step S614, the annotation processing module 170 refers to the job attribute information and checks the execution status and the progress ratio of the job. The annotation processing module 170 then determines whether or not the progress ratio of the job has been changed and whether or not there is a difference between the status of the job and that of the annotation appended to the document. If there is a difference, the annotation processing module 170 processes the annotation. Details of the processing of an annotation will be discussed below by using the flowcharts of Figs. 7 and 8, and more specifically, a processing flow for processing an annotation.

In step S616, the document processing module 180 stores the document in which the processing of the annotation executed in step S614 is reflected in the document management module 140.

Figs. 7 and 8 are flowcharts illustrating an example of processing to be executed on an annotation according to the exemplary embodiment, and more specifically, a processing flow for shifting an annotation to another position in accordance with a change in the job status. This processing flow is executed by the annotation processing module 170.

In step S702, a document is specified from a subject document ID, which is one item of the annotation attribute information. The subject document ID is the ID of a document to which an annotation is appended. In the specified document, an electronic tag indicating the annotation is appended.

In step S704, the attribute information (execution status, progress ratio, start time and date, and end time and date) of the job is obtained.

In step S706, it is determined whether or not the progress ratio of the job has been changed. If the progress ratio of the job has been changed, the process proceeds to step S708. In step S708, the proportion of the annotation that will be filled is changed in accordance with the amount by which the progress ratio of the job has been changed. If the progress ratio of the job has not been changed, the process proceeds to step S718.

In step S710, it is determined whether or not the shift information concerning the annotation, which is one item of the annotation attribute information, indicates ON. If the shift information concerning the annotation indicates ON, the process proceeds to step S712. In step S712, the page at which the annotation will be appended is specified from association information concerning the association between the progress ratio of a job and the annotation appending page. If the shift information concerning the annotation does not indicate ON, the process proceeds to step S718.

In step S714, the annotation appended to the document is shifted to the annotation appending page specified in step S712.

In step S716, the annotation appending page, which is one item of the annotation attribute information, is updated.

In step S718, it is determined whether or not the job execution status has been changed. If the job execution status has been changed, the process proceeds to step S720. In step S720, it is checked whether the changed job execution status indicates "active" or "suspended". If it is determined in step S718 that the job execution status has not been changed, the process proceeds to step S728.

If it is determined in step S720 that the changed job execution status indicates "active", the process proceeds to step S724. In step S724, the annotation is enlarged in a certain proportion, and hatched lines drawn in the entire annotation is deleted. If it is determined in step S720 that the changed job execution status indicates "suspended", the process proceeds to step S722. In step S722, the annotation is shrunk in a certain proportion, and hatched lines are drawn in the entire annotation.

Then, in step S726, the annotation appended to the document is replaced by the annotation processed in step S722 or S724.

Then, in step S728, the progress situation of the job is determined from the scheduled job progress ratio and the number of days remaining before the job end time and date will be reached. The scheduled progress ratio is calculated by using expression (1).

$$100 - (\text{the number of remaining days (job end time and date - current time and date)} \times 100) / (\text{job execution period (job end time and date - job start time and date)}) = \text{scheduled progress ratio}$$

$$\ldots (1)$$

In step S730, it is determined by using expression (2) whether or not the progress situation of the job is equal to or ahead of the scheduled progress ratio.

$$\text{Scheduled progress ratio - current progress ratio obtained from job attribute information} \leq 0$$

$$\ldots (2)$$

If it is determined in step S730 that the progress situation is equal to or ahead of the scheduled progress ratio, expression (2) holds true and the process proceeds to step S734. In step S734, the color of the filled portion of the annotation is changed to green. If it is determined in step S730 that the progress situation is behind the scheduled progress ratio, the process proceeds to step S732. In step S732, it is determined whether or not the progress situation is behind the scheduled progress ratio by 20% or greater. If the result of step S732 is YES, the process proceeds to step S738. In step S738, the color of the filled portion of the annotation is changed to red. If the result of step S732 is NO, the process proceeds to step S736. In step S736, the color of the filled portion of the annotation is changed to yellow. The degree by which the progress situation is behind and the corresponding color may be set by using a management table.

Then, in step S740, the annotation appended to the document is replaced by the annotation processed in step S734, S736, or S738.

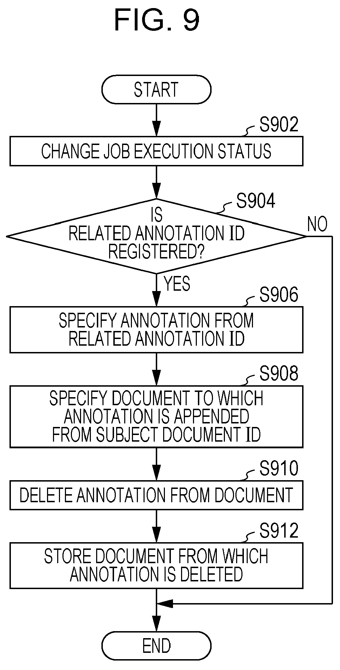

Fig. 9 is a flowchart illustrating an example of a job completion processing, and more specifically, a processing flow for deleting an annotation appended to a document upon completion of a job.

In step S902, the job processing module 150 changes the job execution status to "completed".

In step S904, the annotation difference determining module 160 determines whether or not a related annotation ID, which is one item of the job attribute information, is registered. If a related annotation ID is registered, the process proceeds to step S906. If a related annotation ID is not registered, the processing is terminated. In step S906, the annotation processing module 170 specifies an annotation from the related annotation ID.

In step S908, the annotation processing module 170 specifies a document to which the annotation is appended from a subject document ID (ID of a document to which the annotation is appended), which is one item of the annotation attribute information.

In step S910, the document processing module 180 deletes the annotation from the document specified in step S908.

In step S912, the document processing module 180 stores the document from which the annotation is deleted in step S910 in the document management module 140.

The above-described processing will be discussed below through illustration of a use case (specific example). As a use case, an example of processing to be executed in a scene where a new report (document) created by a department in charge of in-house communications is stored in the document management module 140 and will be open across the company after the new report is approved by plural relation departments will be discussed below.

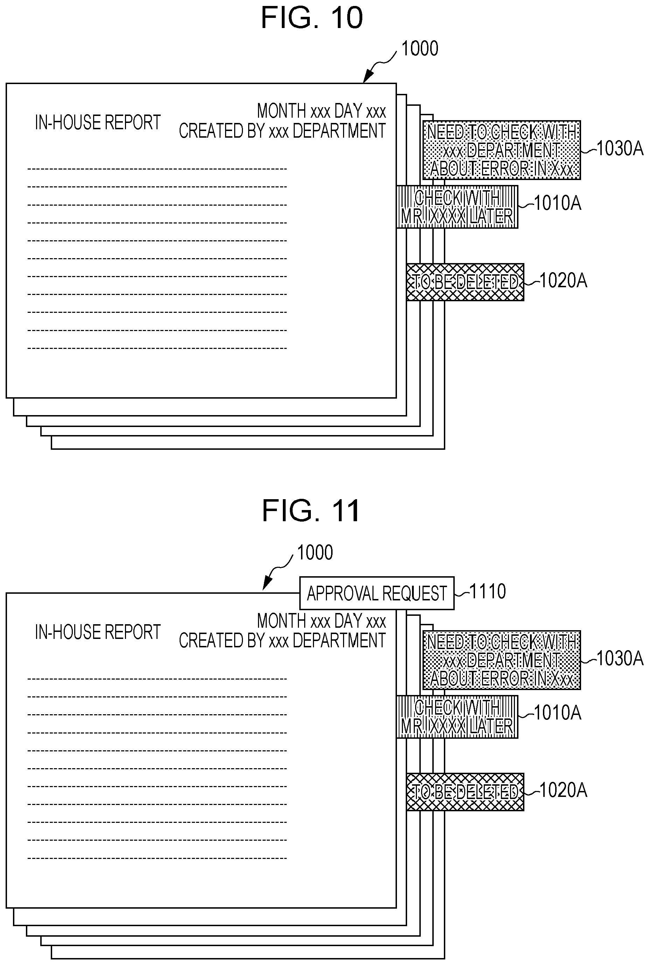

Fig. 10 illustrates an example of processing according to the exemplary embodiment. When a job concerning an approval request is started for a document 1000 requiring approvals, the information processing apparatus 100 checks for annotations concerning an approval request among annotations related to the document 1000. It is assumed that there are three annotations (annotations 1010A, 1020A, and 1030A) related to the document 1000. These annotations 1010A, 1020A, and 1030A have been related to the document 1000 by an editor of the document 1000 (including a creator and a viewer of the document 1000). Within the annotation 1010A, "check with Mr. xxxx later" is indicated in a blue background (indicated in a vertically striped pattern in the drawings). Within the annotation 1020A, "to be deleted" is indicated in a dark brown background (indicated in a cross pattern in the drawings). Within the annotation 1030A, "need to check with xxx department about an error in Xxx" is indicated in a yellow background (indicated in a dot pattern in the drawings). It is determined that the three annotations 1010A, 1020A, and 1030A are not annotations concerning an approval request. That is, since annotations concerning an approval request are not related to the document 1000, a template is specified from the job type so that an annotation 1110 concerning an approval request may be automatically created. The annotation 1110 is then related to the document 1000 (the annotation 1110 is appended to the document 1000, as shown in Fig. 11).

An example of template information used for appending an annotation to a document at the start of a job is a job-and-template-annotation association table 1200 shown in Fig. 12. The data structure of the job-and-template-annotation association table 1200 is the same as that of the job-and-template-annotation association table 400 shown in Fig. 4. The job-and-template-annotation association table 1200 is stored in the job management module 110 and is accessed by the job processing module 150.

In this example, the in-house report approval (job ID "2") has been selected. Accordingly, the template annotation "Annotation-35" is selected from the job-and-template-annotation association table 1200 and utilized so that the annotation 1110 will be automatically generated.

An example of a template annotation attribute information table used in the information processing apparatus 100 is a template annotation attribute information table 1300 shown in Fig. 13. The data structure of the template annotation attribute information table 1300 is the same as that of the template annotation attribute information table 500 shown in Fig. 5. The template annotation attribute information table 1300 is stored in the template annotation management module 120 and is accessed by the annotation processing module 170.

An annotation is automatically generated on the basis of information in the template annotation attribute information table 1300, and the generated annotation is appended to the coordinates "250:-50" specified in an annotation appending coordinate column 1370 of the page "1" specified in an annotation appending page column 1360 of the document 1000.

An example of an annotation attribute information table used in the information processing apparatus 100 is an annotation attribute information table 1400 shown in Fig. 14. Fig. 14 illustrates an example of the data structure of the annotation attribute information table 1400. The annotation attribute information table 1400 has an annotation ID column 1410, a text information column 1420, a subject document ID column 1430, a related job ID column 1440, a size (aspect ratio) column 1450, an annotation appending page column 1460, an annotation appending coordinate (aspect ratio) column 1470, and a shift column 1480. In the exemplary embodiment, in the annotation ID column 1410, information for uniquely identifying an annotation (annotation ID) is stored. In the text information column 1420, text information to be indicated in an annotation is stored. In the exemplary embodiment, in the subject document ID column 1430, information for uniquely identifying a subject document (subject document ID) is stored. The subject document is a document to which an annotation is related. In the related job ID column 1440, a job ID related to an annotation is stored. In the size column 1450, the size (aspect ratio) of an annotation is stored. In the annotation appending page column 1460, the page of a document to which an annotation will be appended is stored. In the annotation appending coordinate (aspect ratio) column 1470, the coordinates (aspect ratio) within a page to which an annotation will be appended are stored. In the shift column 1480, information (shift ON/OFF) indicating whether or not the position at which an annotation is appended may be changed according to the situation is stored. In this case, this information indicates whether or not the position at which an annotation is appended may be changed to a different page or to different coordinates within the same page. The annotation attribute information table 1400 is stored in the annotation management module 130 and is accessed by the annotation processing module 170. That is, the annotation attribute information table 1400 concerning a specific annotation is generated on the basis of the template annotation attribute information table 1300.

When a new annotation is automatically generated, information concerning the new annotation is added to the annotation attribute information table 1400. A manually created annotation (by an operation of a document editor) is also managed in the annotation attribute information table 1400.

In the document 100 for which a job is started, if annotations (annotations 1010A, 1020A, and 1030A) have already been appended to the document 1000 by a document editor, the annotations 1010A, 1020A, and 1030A are changed to colors different from that of the annotation 1110 related to the job, such as in annotations 1010B, 1020B, and 1030B, as shown in Fig. 15, and are changed to transparent while the job is active (in the process of an approval request). For distinguishing the two annotations (distinguishing the annotation 1110 from one of the annotations 1010A through 1030A), the annotation related to an active job is extracted from the subject document ID 1430 and the related job ID 1440 of the annotation attribute information table 1400 is extracted.

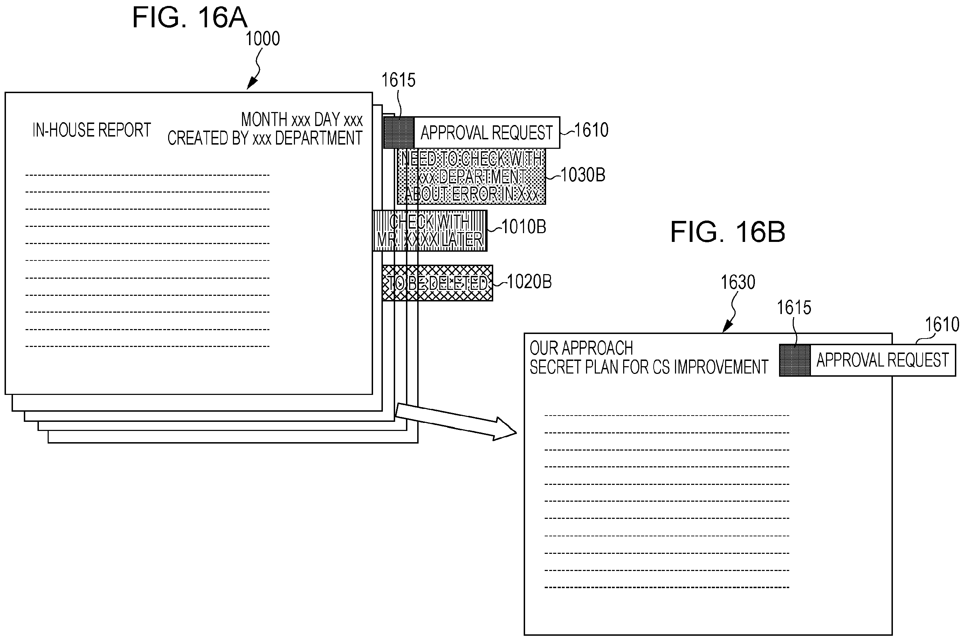

A department having relation to the department in charge of in-house communications (hereinafter referred to as a "relation department") is required to give its approval to the content of a page related to the relation department, and does not have to check pages other than the page related to the relation department. The annotation 1110 is shifted among the pages related to relation departments. As shown in the example of Fig. 16A, if a person in charge in a relation department B has viewed the page 3, an annotation 1610 (annotation 1110) is appended to the page 3 of the document 1000. In the example of Fig. 16B, a page 1630 (page 3 of the document 1000) to which the annotation 1610 is appended is shown.

The progress situation of a job in comparison with the schedule may be checked according to the color (green: as scheduled, yellow: slightly delayed, and red: considerably delayed) within a progress situation region 1615 of the annotation 1610. The progress ratio may be checked by the degree of filling applied to the annotation 1610 (the area by which the progress situation region 1615 occupies the annotation 1610). As the job progresses (in this case, as more relation departments give their approvals), the progress situation region 1615 grows to the right side, and the area by which the progress situation region 1615 occupies the annotation 1610 is increased.

Fig. 17 illustrates an example of the data structure of a job attribute information table 1700. The job attribute information table 1700 is stored in the job management module 110, is created by the job processing module 150, and is accessed by the annotation difference determining module 160. The job attribute information table 1700 has a job ID column 1710, a template name column 1720, a subject document column 1730, a related annotation ID column 1740, a template annotation ID column 1750, a start time-and-date column 1760, an end time-and-date column 1770, a progress ratio column 1780, and an execution status column 1790. In the job ID column 1710, a job ID is stored. In the template name column 1720, the name of a template related to a job is stored. In the subject document column 1730, a subject document related to a job is stored. In the related annotation ID column 1740, the ID of an annotation related to a job is stored. In the template annotation ID column 1750, the ID of a template annotation related to a job is stored. In the start time-and-date column 1760, the start time and date of a job is stored. In the end time-and-date column 1770, the end time and date of a job is stored. In the progress ratio column 1780, the current progress ratio of a job is stored. In the execution status column 1790, the execution status (information indicating, for example, "active" or "not started") of a job is stored.

Fig. 18 illustrates an example of the data structure of an annotation attribute information table 1800. The data structure of the annotation attribute information table 1800 is the same as that of the annotation attribute information table 1400.

An example of association information concerning the association between the progress ratio of a job and an annotation appending page used for shifting an annotation is a progress-ratio-and-annotation-appending-page association table 1900. The progress-ratio-and-annotation-appending-page association table 1900 is stored in the template annotation management module 120 and is accessed by the annotation processing module 170. Fig. 19 illustrates an example of the data structure of the progress-ratio-and-annotation-appending-page association table 1900. The progress-ratio-and-annotation-appending-page association table 1900 includes an annotation ID column 1910, a progress ratio column 1920, and an annotation appending page column 1930. In the annotation ID column 1910, an annotation ID is stored. In the progress ratio column 1920, the progress ratio is stored. In the annotation appending page column 1930, the page to which an annotation will be appended in association with the progress ratio of a job related to this annotation is stored.

That is, data concerning the annotation appending page in association with the template annotation and the progress ratio is stored. Every time one department has given its approval, the progress ratio changes. Accordingly, by relating the progress ratio to the annotation appending page by using the progress-ratio-and-annotation-appending-page association table 1900, an annotation is shifted to the page of a next department.

An annotation is filled on the basis of the progress ratio in the progress ratio column 1780 of the job attribute information table 1700. The number of remaining days is also calculated from the start time and date, the end time and date, and the current time and date.

Then, the scheduled progress ratio is calculated from the ratio of the number of remaining days to the number of days given to a job by using the above-described expression (1). The scheduled progress ratio is then compared with the current progress ratio by using the above-described expression (2).

As a result of comparison, if the current progress ratio is equal to or greater than the scheduled progress ratio (if the current progress is as scheduled or ahead of the schedule), in other words, if the result of expression (2) is equal to or smaller than 0, the filled portion of the annotation is filled in green.

If the current progress ratio is smaller than the scheduled progress ratio (if the current progress is behind the schedule) by smaller than 20%, the filled portion of the annotation is filled in yellow. If the current progress ratio is smaller than the scheduled progress ratio by 20% or greater, the filled portion of the annotation is filled in red.

By using the progress ratio in the progress ratio column 1780 and the template annotation ID in the template annotation ID column 1750 of the job attribute information table 1700, the annotation appending page in association with the current progress ratio is specified from the progress-ratio-and-annotation-appending-page association table 1900.

The difference between the specified annotation appending page and the annotation appending page in the annotation appending page column 1460 of the annotation attribute information table 1400 is calculated, and if the calculated difference is other than 0, the annotation is shifted to the specified annotation appending page.

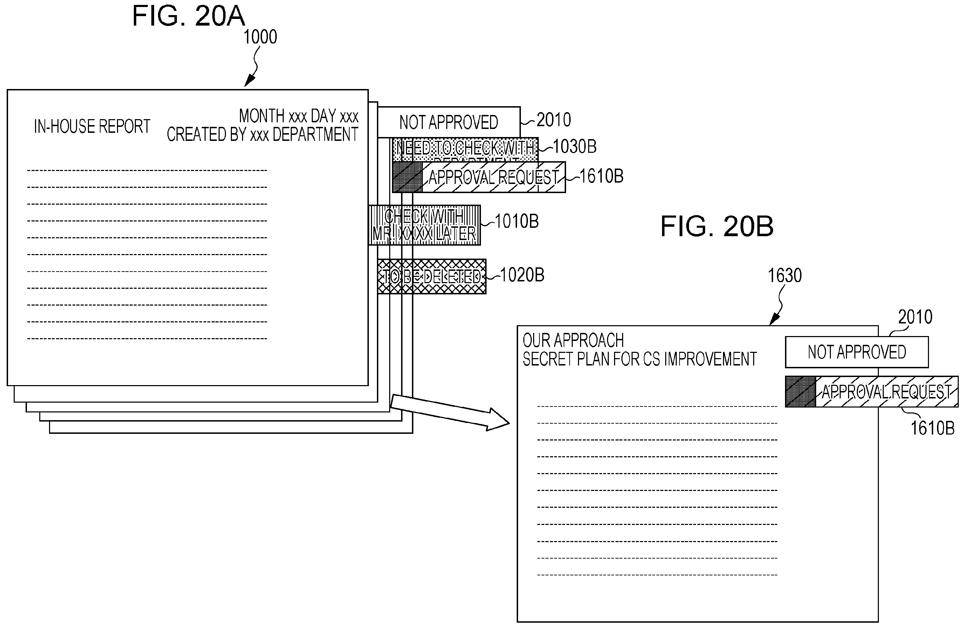

If a document has been disapproved by a relation department in the process of an approval request, as shown in Fig. 20A, a new annotation 2010 indicating "not approved" is added to the page 3 of the document 1000, and an annotation 1610B indicating "approval request" is shrunk and hatched lines are added to the annotation 1610B, since the job is suspended. In the example of Fig. 20B, the page 1630 (page 3 of the document 1000) to which the annotations 1610B and 2010 are appended is shown.

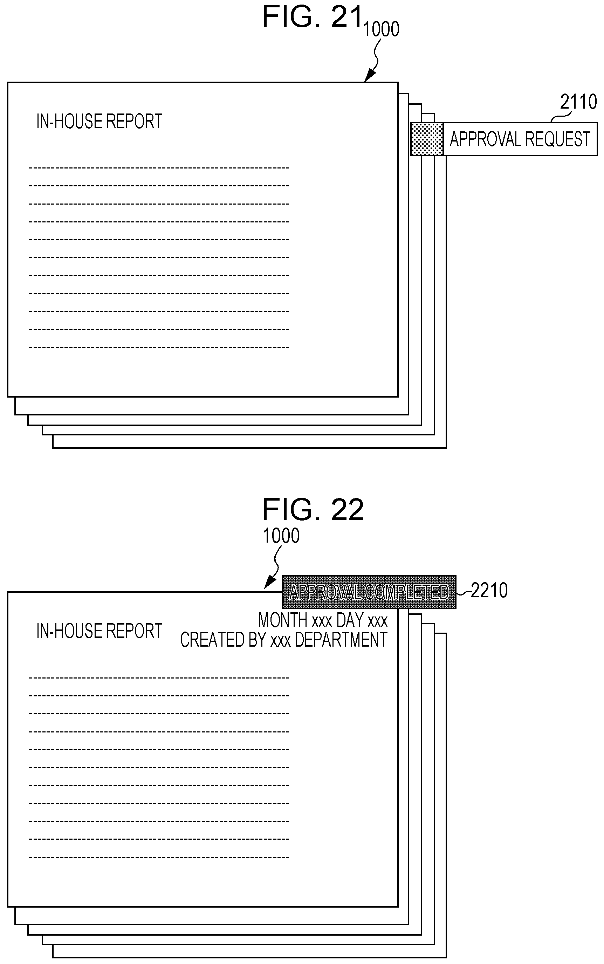

If the department in charge of in-house communications has made corrections to the cause of the portion which has not been approved, as shown in Fig. 21, the annotation 2010 indicating "not approved" is deleted and an annotation 2110 (annotation 1610B) is enlarged to the original size.

If the progress ratio of a job is smaller than the scheduled progress ratio (if the current progress is behind the schedule), the color of an annotation is changed. In the example shown in Fig. 21, the left side portion of the annotation 2110 is changed from green to yellow.

After all the relation departments have given their approvals, the annotation 2110 is shifted to the top page of the document 1000, and is replaced by an annotation 2210 indicating "approval completed", as shown in Fig. 22. The color of the annotation 2210 is green.

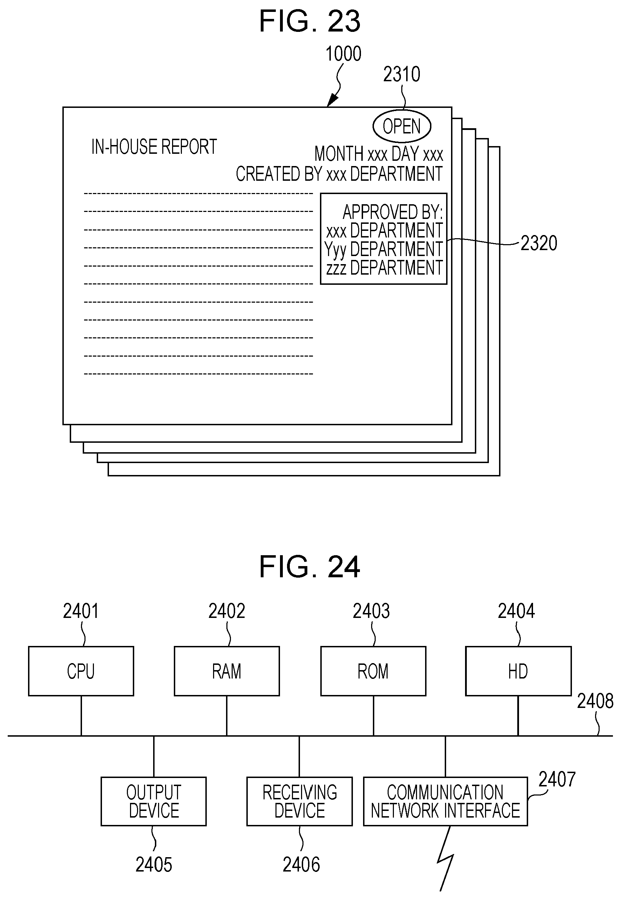

Then, after checking the annotation 2210 "approval completed" (upon completion of a job), as shown in Fig. 23, the department in charge of in-house communications makes the document 1000 open by deleting the annotation 2210 "approval request" and by adding an annotation 2310 "open" and an annotation 2320 indicating the departments that have given their approvals. Within the annotation 2320, the names of the departments that have given their approvals in the job are indicated.

The hardware configuration of a computer in which a program serving as the exemplary embodiment of the invention is executed is a general computer, such as a personal computer (PC) or a server, as shown in Fig. 24. More specifically, such a computer uses a CPU 2401 as a processor (operation unit) and a RAM 2402, a ROM 2403, and an HD 2404 as storage devices. As the HD 2404, a hard disk or a solid state drive (SSD) may be used. The computer includes the CPU 2401, the RAM 2402, the ROM 2403, the HD 2404, such as an auxiliary storage device (may be a flash memory), an output device 2405, such as a cathode ray tube (CRT), a liquid crystal display, and a speaker, a receiving device 2406, a communication network interface 2407, and a bus 2408. The CPU 2401 executes a program, such as the job processing module 150, the annotation difference determining module 160, the annotation processing module 170, and the document processing module 180. The RAM 2402 stores this program and data therein. The ROM 2403 stores a program for starting the computer. The receiving device 2406 receives data on the basis of an operation performed by a user on a keyboard, a mouse, a touch panel, or a microphone. The communication network interface 2407 is, for example, a network interface card, for communicating with a communication network. The above-described elements are connected to one another via the bus 2408 and send and receive data to and from one another. The above-described computer may be connected to another computer configured similarly to this computer via a network.

In the above-described exemplary embodiment, concerning an element implemented by a computer program, such a computer program, which is software, is read into a system having the system configuration shown in Fig. 24, and the above-described exemplary embodiment is implemented in a cooperation of software and hardware resources.

The hardware configurations shown in Fig. 24 are only examples, and the exemplary embodiment may be configured in any manner as long as the modules described in the exemplary embodiment are executable. For example, some modules may be configured as dedicated hardware (for example, an application specific integrated circuit (ASIC)), or some modules may be installed in an external system and be connected to the PC via a communication line. Alternatively, a system, such as that shown in Fig. 24, may be connected to a system, such as that shown in Fig. 24, via a communication line, and may be operated in cooperation with each other. Additionally, instead of into a PC, the modules may be integrated into a mobile information communication device (including a cellular phone, a smartphone, a mobile device, and a wearable computer), a home information appliance, a robot, a copying machine, a fax machine, a scanner, a printer, or a multifunction device (image processing apparatus including two or more functions among a scanner, a printer, a copying machine, and a fax machine).

In the above-described exemplary embodiment, when comparing a certain value with a predetermined value, "equal to or greater than", "equal to or smaller than", "greater than", and "smaller than" may also be read as "greater than", "smaller than", "equal to or greater than", and "equal to or smaller than", respectively, unless there is an inconsistency between a combination of two values to be compared.

In the above-described exemplary embodiment, specific numeric values are given as thresholds, for example. However, these numeric values are only examples, and other numeric values may be used.

In the above-described exemplary embodiment, examples in which the timing at which an annotation is generated or an annotation is appended to a document is a time point when each of a series of processing operations has been completed have been discussed. However, an annotation may be generated or be appended to a document when an instruction to display a document is given from a user. In this case, an annotation indicating the progress situation of a job may be stored separately from a document in the annotation management module 130, and in response to an instruction to display the document, the annotation may be superposed on the document. Alternatively, in response to an instruction to display a document from a user, an annotation may be generated on the basis of attribute information indicating the progress situation of a job, and the annotation may be superposed on the document.

The above-described program may be stored in a recording medium and be provided. The program recorded on a recording medium may be provided via a communication medium. In this case, the above-described program may be implemented as a "non-transitory computer readable medium storing the program therein" in the exemplary embodiment of the invention.

The "non-transitory computer readable medium storing a program therein" is a recording medium storing a program therein that can be read by a computer, and is used for installing, executing, and distributing the program.

Examples of the recording medium are digital versatile disks (DVDs), and more specifically, DVDs standardized by the DVD Forum, such as DVD-R, DVD-RW, and DVD-RAM, DVDs standardized by the DVD+RW Alliance, such as DVD+R and DVD+RW, compact discs (CDs), and more specifically, a read only memory (CD-ROM), a CD recordable (CD-R), and a CD rewritable (CD-RW), Blu-ray disc (registered trademark), a magneto-optical disk (MO), a flexible disk (FD), magnetic tape, a hard disk, a ROM, an electrically erasable programmable read only memory (EEPROM) (registered trademark), a flash memory, a RAM, a secure digital (SD) memory card, etc.

The entirety or part of the above-described program may be recorded on such a recording medium and stored therein or distributed. Alternatively, the entirety or part of the program may be transmitted through communication by using a transmission medium, such as a wired network used for a local area network (LAN), a metropolitan area network (MAN), a wide area network (WAN), the Internet, an intranet, or an extranet, a wireless communication network, or a combination of such networks. The program may be transmitted by using carrier waves.

The above-described program may be part of another program, or may be recorded, together with another program, on a recording medium. The program may be divided and recorded on plural recording media. Further, the program may be recorded in any form, for example, it may be compressed or encrypted, as long as it can be reconstructed.

The foregoing description of the exemplary embodiment of the present invention has been provided for the purposes of illustration and description. It is not intended to be exhaustive or to limit the invention to the precise forms disclosed. Obviously, many modifications and variations will be apparent to practitioners skilled in the art. The embodiment was chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

**Claims**

1. An information processing apparatus comprising:

   a setting unit that sets a series of processing operations to be executed in relation to a document;
   an execution unit that executes the set series of processing operations;
   a storage unit that stores the document and information indicating a situation of the series of processing operations executed by the execution unit in association with each other; and
   a control unit that performs control so that the document on which the information indicating the situation of the series of processing operations is superposed as viewable image information will be displayed upon receiving an instruction to display the document.

2. The information processing apparatus according to Claim 1, wherein the viewable image information is an annotation, and the viewable image information is superposed on the document by appending the annotation to the document.

3. The information processing apparatus according to Claim 2, wherein the annotation is generated when each of the series of processing operations has been completed or when an instruction to display the document is given from a user.

4. The information processing apparatus according to Claim 2, wherein the annotation is appended to the document when each of the series of processing operations has been completed or when an instruction to display the document is given from a user.

5. The information processing apparatus according to any one of Claims 1 to 4, wherein:

the storage unit stores the document and image information indicating the situation of the series of processing operations in association with each other; and
the control unit performs control so that the image information will be superposed on the document in accordance with an instruction to display the document from a user.

6. The information processing apparatus according to Claim 1 or 2, wherein the control unit performs control so that an annotation will be generated from the information indicating the situation of the series of processing operations and will be superposed on the document in accordance with an instruction to display the document from a user.

7. The information processing apparatus according to any one of Claims 1 to 6, wherein the control unit performs control so that a mode of the viewable image information to be superposed on the document and to be displayed will be varied in accordance with a progress of the series of processing operations.

8. The information processing apparatus according to any one of Claims 1 to 7, wherein the control unit performs control so that a position on the document at which the viewable image information is superposed will be varied in accordance with a progress of the series of processing operations.

9. The information processing apparatus according to any one of Claims 1 to 8, wherein the control unit performs control so that the viewable image information will not be superposed on the document and displayed after the series of processing operations has been completed.

10. The information processing apparatus according to any one of Claims 1 to 9, wherein:

the series of processing operations is approval processing for the document; and
the control unit performs control so that, if the document has not been approved by a user executing the series of processing operations, image information indicating that the document has not been approved will be superposed on the document and displayed.

11. An information processing method comprising:

setting a series of processing operations to be executed in relation to a document;
executing the set series of processing operations;
storing the document and information indicating a situation of the series of processing operations in association with each other; and
performing control so that the document on which the information indicating the situation of the series of processing operations is superposed as viewable image information will be displayed upon receiving an instruction to display the document.

12. A program causing a computer to function as:

a setting unit that sets a series of processing operations to be executed in relation to a document;
an execution unit that executes the set series of processing operations;

a storage unit that stores the document and information indicating a situation of the series of processing operations executed by the execution unit in association with each other; and
a control unit that performs control so that the document on which the information indicating the situation of the series of processing operations is superposed as viewable image information will be displayed upon receiving an instruction to display the document.

100

# FIG. 1

110
JOB MANAGEMENT MODULE

120
TEMPLATE ANNOTATION MANAGEMENT MODULE

130
ANNOTATION MANAGEMENT MODULE

140
DOCUMENT MANAGEMENT MODULE

150
JOB PROCESSING MODULE

160
ANNOTATION DIFFERENCE DETERMINING MODULE

170
ANNOTATION PROCESSING MODULE

180
DOCUMENT PROCESSING MODULE

INFORMATION PROCESSING APPARATUS

# FIG. 2

290

210A
USER TERMINAL

210B
USER TERMINAL

210C
USER TERMINAL

100
INFORMATION PROCESSING APPARATUS

# FIG. 3

```
        ┌──────────┐
        │  START   │
        └──────────┘
              │
              ▼            ╭─ S302
┌──────────────────────────────────┐
│   CHANGE JOB EXECUTION STATUS     │
└──────────────────────────────────┘
              │
              ▼            ╭─ S304
        ╱───────────╲
      ╱       IS       ╲          YES
   ╱  THERE RELATED ANNOTATION ╲ ──────────┐
      ╲       ID?      ╱                     │
        ╲───────────╱                        │
              │ NO                           │
              ▼          ╭─ S308             ▼         ╭─ S306
┌──────────────────────────┐      ┌──────────────────────────┐
│    SPECIFY TEMPLATE       │      │    OUTPUT MESSAGE THAT    │
│ ANNOTATION FROM JOB TYPE  │      │  RELATED ANNOTATION HAS   │
└──────────────────────────┘      │  ALREADY BEEN APPENDED    │
              │                    └──────────────────────────┘
              ▼          ╭─ S310               │
┌──────────────────────────┐                  │
│    GENERATE ANNOTATION    │                  │
│ FROM TEMPLATE ANNOTATION  │                  │
└──────────────────────────┘                  │
              │                                │
              ▼          ╭─ S312               │
┌──────────────────────────┐                  │
│ APPEND ANNOTATION TO DOCUMENT │              │
└──────────────────────────┘                  │
              │                                │
              ▼          ╭─ S314               │
┌──────────────────────────┐                  │
│      STORE DOCUMENT       │                  │
│  APPENDED WITH ANNOTATION │                  │
└──────────────────────────┘                  │
              │                                │
              ▼          ╭─ S316               │
┌──────────────────────────┐                  │
│  REGISTER ID OF ANNOTATION │                 │
│  APPENDED TO DOCUMENT IN  │                  │
│  JOB ATTRIBUTE INFORMATION │                 │
└──────────────────────────┘                  │
              │◄───────────────────────────────┘
              ▼
        ┌──────────┐
        │   END    │
        └──────────┘
```

# FIG. 4

| JOB ID | NAME | TEMPLATE ANNOTATION ID |
|--------|------|------------------------|
| 1 | TEST CIRCULATION | Annotation-11 |
| 2 | IN-HOUSE REPORT APPROVAL | Annotation-35 |
| 3 | END-OF-MONTH APPROVAL | Annotation-32 |
| 4 | DEPARTMENT CIRCULATION | Annotation-12 |

410  420  430  400

# FIG. 5

| TEMPLATE ANNOTATION ID | NAME | RELATED JOB ID | TEXT INFORMATION | SIZE (ASPECT RATIO) | ANNOTATION APPENDING PAGE | ANNOTATION APPENDING COORDINATES (ASPECT RATIO) | SHIFT |
|---|---|---|---|---|---|---|---|
| Annotation-35 | OPEN APPROVAL REQUEST | 2 | APPROVAL REQUEST | 50:120 | 1 | 250:-50 | ON |
| Annotation-12 | CS DEPARTMENT CIRCULATION | 4 | CIRCULATION | 50:80 | 2 | 140:-50 | OFF |

510  520  530  540  550  560  570  580  500

# FIG. 6

```
                    ┌──────────┐
                    │  START   │
                    └────┬─────┘
                         │
                         ▼
                    ╱◁─────────▷╲        S602
                  ╱   IS IT       ╲
                ╱  NECESSARY TO     ╲  YES
               ◁  CHANGE JOB         ▷──────────┐
                ╲  EXECUTION       ╱            │
                  ╲  STATUS?     ╱              ▼        S604
                    ╲───┬─────╱         ┌──────────────────────────┐
                      NO│                │ CHANGE JOB EXECUTION     │
                        │◄───────────────┤ STATUS                   │
                        │                └──────────────────────────┘
                        ▼
                    ╱◁─────────▷╲        S606
                  ╱   IS IT       ╲
                ╱  NECESSARY TO     ╲  YES
               ◁  CHANGE JOB         ▷──────────┐
                ╲  PROGRESS        ╱            │
                  ╲  RATIO?      ╱              ▼        S608
                    ╲───┬─────╱         ┌──────────────────────────┐
                      NO│                │ CHANGE JOB PROGRESS RATIO│
                        │◄───────────────┤                          │
                        │                └──────────────────────────┘
                        ▼
                    ╱◁─────────▷╲        S610
                  ╱     IS         ╲
                ╱  THERE RELATED     ╲  NO
               ◁  ANNOTATION         ▷──────────────┐
                ╲    ID?           ╱                │
                  ╲──────┬──────╱                   │
                       YES│                         │
                          ▼        S612             │
              ┌──────────────────────────┐          │
              │ SPECIFY ANNOTATION FROM  │          │
              │ RELATED ANNOTATION ID    │          │
              └───────────┬──────────────┘          │
                          ▼        S614             │
              ┌──────────────────────────┐          │
              │ REFER TO JOB ATTRIBUTE    │          │
              │ INFORMATION AND CHECK     │          │
              │ EXECUTION STATUS AND      │          │
              │ PROGRESS RATIO, DETERMINE │          │
              │ WHETHER OR NOT PROGRESS   │          │
              │ RATIO HAS BEEN CHANGED    │          │
              │ AND THERE IS A DIFFERENCE │          │
              │ BETWEEN JOB AND APPENDED  │          │
              │ ANNOTATION, AND PROCESSES │          │
              │ ANNOTATION                │          │
              └───────────┬──────────────┘          │
                          ▼        S616             │
              ┌──────────────────────────┐          │
              │    STORE DOCUMENT        │          │
              └───────────┬──────────────┘          │
                          │◄──────────────────────────┘
                          ▼
                    ┌──────────┐
                    │   END    │
                    └──────────┘
```

# FIG. 7

START

**S702**
SPECIFY DOCUMENT FROM
SUBJECT DOCUMENT ID

**S704**
OBTAIN JOB ATTRIBUTE INFORMATION

**S706**
HAS
PROGRESS RATIO OF JOB BEEN
CHANGED?

NO

YES

**S708**
CHANGE THE PROPORTION OF
ANNOTATION TO BE FILLED IN ACCORDANCE
WITH THE AMOUNT BY WHICH PROGRESS
RATIO OF JOB HAS BEEN CHANGED

**S710**
DOES
SHIFT INFORMATION
CONCERNING ANNOTATION
INDICATE ON?

NO

YES

**S712**
SPECIFY PAGE TO WHICH
ANNOTATION WILL BE APPENDED

**S714**
SHIFT ANNOTATION TO
ANNOTATION APPENDING PAGE

**S716**
UPDATE ANNOTATION
APPENDING PAGE

**S718**
HAS JOB
EXECUTION STATUS BEEN
CHANGED?

YES

NO

① 

②

# FIG. 8

① ②

S720

DOES CHANGED JOB EXECUTION STATUS INDICATE "ACTIVE" OR "SUSPENDED"?

ACTIVE

SUSPENDED

S724

ENLARGE ANNOTATION IN CERTAIN PROPORTION AND DELETE HATCHED LINES DRAWN IN ENTIRE ANNOTATION

S722

SHRINK ANNOTATION IN CERTAIN PROPORTION AND DRAW HATCHED LINES IN ENTIRE ANNOTATION

S726

REPLACE ANNOTATIONS

S728

DETERMINE JOB PROGRESS SITUATION FROM SCHEDULED PROGRESS RATIO AND REMAINING DAYS

S730

IS PROGRESS SITUATION EQUAL TO OR AHEAD OF SCHEDULED PROGRESS RATIO?

NO

YES

S732

IS PROGRESS SITUATION BEHIND BY 20% OR GREATER?

YES

NO

S738

CHANGE THE COLOR OF FILLED PORTION OF ANNOTATION TO RED

S736

CHANGE THE COLOR OF FILLED PORTION OF ANNOTATION TO YELLOW

S734

CHANGE THE COLOR OF FILLED PORTION OF ANNOTATION TO GREEN

S740

REPLACE ANNOTATIONS

END

# FIG. 9

```
         ( START )
             │
             ▼                              S902
┌─────────────────────────────────────┐
│     CHANGE JOB EXECUTION STATUS      │
└─────────────────────────────────────┘
             │
             ▼                              S904
        ╱─────────────╲                        NO
       ╱      IS        ╲────────────────────────┐
      ╱ RELATED ANNOTATION ID ╲                  │
      ╲   REGISTERED?   ╱                         │
       ╲───────────────╱                          │
             │ YES                                │
             ▼                              S906   │
┌─────────────────────────────────────┐          │
│     SPECIFY ANNOTATION FROM          │          │
│       RELATED ANNOTATION ID          │          │
└─────────────────────────────────────┘          │
             │                                    │
             ▼                              S908   │
┌─────────────────────────────────────┐          │
│   SPECIFY DOCUMENT TO WHICH          │          │
│   ANNOTATION IS APPENDED             │          │
│   FROM SUBJECT DOCUMENT ID           │          │
└─────────────────────────────────────┘          │
             │                                    │
             ▼                              S910   │
┌─────────────────────────────────────┐          │
│   DELETE ANNOTATION FROM DOCUMENT    │          │
└─────────────────────────────────────┘          │
             │                                    │
             ▼                              S912   │
┌─────────────────────────────────────┐          │
│   STORE DOCUMENT FROM WHICH          │          │
│     ANNOTATION IS DELETED            │          │
└─────────────────────────────────────┘          │
             │                                    │
             ▼◄───────────────────────────────────┘
         (  END  )
```

# FIG. 10

# FIG. 11

## FIG. 12

| JOB ID | NAME | TEMPLATE ANNOTATION ID |
|---|---|---|
| 1 | TEST CIRCULATION | Annotation-11 |
| 2 | IN-HOUSE REPORT APPROVAL | Annotation-35 |
| 3 | END-OF-MONTH APPROVAL | Annotation-32 |
| 4 | DEPARTMENT CIRCULATION | Annotation-12 |

*(1210 JOB ID, 1220 NAME, 1230 TEMPLATE ANNOTATION ID, 1200)*

## FIG. 13

| TEMPLATE ANNOTATION ID | NAME | RELATED JOB ID | TEXT INFORMATION | SIZE (ASPECT RATIO) | ANNOTATION APPENDING PAGE | ANNOTATION APPENDING COORDINATES (ASPECT RATIO) | SHIFT |
|---|---|---|---|---|---|---|---|
| Annotation-35 | OPEN APPROVAL REQUEST | 2 | APPROVAL REQUEST | 50:120 | 1 | 250:−50 | ON |
| Annotation-12 | CS DEPARTMENT CIRCULATION | 4 | CIRCULATION | 50:80 | 2 | 140:−50 | OFF |

*(1310, 1320, 1330, 1340, 1350, 1360, 1370, 1380, 1300)*

EP 3 098 706 A1

## FIG. 14

| ANNOTATION ID | TEXT INFORMATION | SUBJECT DOCUMENT ID | RELATED JOB ID | SIZE (ASPECT RATIO) | ANNOTATION APPENDING PAGE | ANNOTATION APPENDING COORDINATES (ASPECT RATIO) | SHIFT |
|---|---|---|---|---|---|---|---|
| Annota-22 | APPROVAL REQUEST | Document-21 | Job-35 | 50:120 | 1 | 250:−50 | ON |
| Annota-25 | DELETE COMMENT | Document-21 | NONE | 50:80 | 5 | 20:−50 | OFF |

1410 1420 1430 1440 1450 1460 1470 1480 1400

# FIG. 15

1000

APPROVAL REQUEST ~1110

IN-HOUSE REPORT
MONTH xxx DAY xxx
CREATED BY xxx DEPARTMENT

NEED TO CHECK WITH xxx DEPARTMENT ABOUT ERROR IN Xxx ~1030B

CHECK WITH MR. XxXx LATER ~1010B

TO BE DELETED ~1020B

# FIG. 16A

1000

**IN-HOUSE REPORT**  MONTH xxx DAY xxx
CREATED BY xxx DEPARTMENT

1615

APPROVAL REQUEST ⎯1610

NEED TO CHECK WITH
xxx DEPARTMENT
ABOUT ERROR IN xxx ⎯1030B

CHECK WITH
MR. XXX LATER ⎯1010B

TO BE DELETED ⎯1020B

# FIG. 16B

1630

1615

1610

**OUR APPROACH**
SECRET PLAN FOR CS IMPROVEMENT    APPROVAL REQUEST

EP 3 098 706 A1

# FIG. 17

| JOB ID (1710) | TEMPLATE NAME (1720) | SUBJECT DOCUMENT (1730) | RELATED ANNOTATION ID (1740) | TEMPLATE ANNOTATION ID (1750) | START TIME AND DATE (1760) | END TIME AND DATE (1770) | PROGRESS RATIO (1780) | EXECUTION STATUS (1790) |
|---|---|---|---|---|---|---|---|---|
| Job-35 | FEB. IN-HOUSE REPORT OPEN APPROVAL REQUEST | Document-21 | Annota-22 | Annotation-35 | MAY 21, 2016 | NOV. 21, 2016 | 60 | ACTIVE |
| Job-12 | MARCH DEPARTMENT CIRCULATION | Document-12 | NONE | Annotation-12 | NONE | NONE | 0 | NOT STARTED |

1700

# FIG. 18

| ANNOTATION ID (1810) | TEXT INFORMATION (1820) | SUBJECT DOCUMENT ID (1830) | RELATED JOB ID (1840) | SIZE (ASPECT RATIO) (1850) | ANNOTATION APPENDING PAGE (1860) | ANNOTATION APPENDING COORDINATES (ASPECT RATIO) (1870) | SHIFT (1880) |
|---|---|---|---|---|---|---|---|
| Annota-22 | APPROVAL REQUEST | Document-21 | Job-35 | 50:120 | 1 | 250:−50 | ON |
| Annota-25 | DELETE COMMENT | Document-21 | NONE | 50:80 | 5 | 20:−50 | OFF |

1800

EP 3 098 706 A1

# FIG. 19

| ANNOTATION ID | PROGRESS RATIO | ANNOTATION APPENDING PAGE |
|---|---|---|
| Annotation-35 | 0 | 1 |
| Annotation-35 | 20 | 2 |
| Annotation-35 | 40 | 3 |
| Annotation-12 | 0 | 10 |
| Annotation-12 | 50 | 20 |
| Annotation-35 | 100 | 1 |

1910    1920    1930    1900

# FIG. 20A

IN-HOUSE REPORT    MONTH xxx DAY xxx CREATED BY xxx DEPARTMENT — 1000

NOT APPROVED — 2010

NEED TO CHECK WITH DEPARTMENT — 1030B

APPROVAL REQUEST — 1610B

CHECK WITH MR. XXX LATER — 1010B

TO BE DELETED — 1020B

# FIG. 20B

OUR APPROACH
SECRET PLAN FOR CS IMPROVEMENT — 1630

NOT APPROVED — 2010

APPROVAL REQUEST — 1610B

EP 3 098 706 A1

## FIG. 21 1000

IN-HOUSE REPORT

---------------------------------------
---------------------------------------
---------------------------------------
---------------------------------------
---------------------------------------
---------------------------------------
---------------------------------------
---------------------------------------
---------------------------------------
---------------------------------------

2110

APPROVAL REQUEST

## FIG. 22

1000

APPROVAL COMPLETED ~2210

IN-HOUSE REPORT

MONTH xxx DAY xxx
CREATED BY xxx DEPARTMENT

---------------------------------------
---------------------------------------
---------------------------------------
---------------------------------------
---------------------------------------
---------------------------------------
---------------------------------------
---------------------------------------
---------------------------------------
---------------------------------------

## FIG. 23

## FIG. 24

Europäisches
Patentamt

European
Patent Office

Office européen
des brevets

# EUROPEAN SEARCH REPORT

**Application Number**

EP 16 15 6243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/204791 A1 (YUSA MINORU [JP]) 28 August 2008 (2008-08-28) * paragraphs [0015] - [0017] * * paragraphs [0038] - [0055] * * figures 1,3-5 * | 1-12 | INV. G06F3/12 G06F17/24 G06Q10/10 |
| X | US 2002/161602 A1 (DOUGHERTY KAREN ANN [US] ET AL) 31 October 2002 (2002-10-31) * paragraphs [0146], [0167] - [0169] * * paragraphs [0237] - [0254] * * paragraphs [0286] - [0301] * * figures 4,56-62 * | 1-12 | |
| A | US 2011/119609 A1 (BHATT NIKHIL [US] ET AL) 19 May 2011 (2011-05-19) * paragraphs [0023] - [0030] * | 1-12 | |

TECHNICAL FIELDS
SEARCHED (IPC)

G06F
H04N

The present search report has been drawn up for all claims

| Place of search | Date of completion of the search | Examiner |
|---|---|---|
| The Hague | 7 October 2016 | Vilella, Josep |

EPO FORM 1503 03.82 (P04C01)

## ANNEX TO THE EUROPEAN SEARCH REPORT
## ON EUROPEAN PATENT APPLICATION NO.

EP 16 15 6243

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2016

| Patent document cited in search report | | Publication date | Patent family member(s) | | | Publication date |
|---|---|---|---|---|---|---|
| US 2008204791 | A1 | 28-08-2008 | CN | 101256567 | A | 03-09-2008 |
| | | | JP | 5239170 | B2 | 17-07-2013 |
| | | | JP | 2008210346 | A | 11-09-2008 |
| | | | US | 2008204791 | A1 | 28-08-2008 |
| US 2002161602 | A1 | 31-10-2002 | AU | 2002241883 | A1 | 06-08-2002 |
| | | | US | 2002103689 | A1 | 01-08-2002 |
| | | | US | 2002161602 | A1 | 31-10-2002 |
| | | | WO | 02059717 | A2 | 01-08-2002 |
| US 2011119609 | A1 | 19-05-2011 | NONE | | | |

EPO FORM P0459

For more details about this annex : see Official Journal of the European Patent Office, No. 12/82

**REFERENCES CITED IN THE DESCRIPTION**

**Patent documents cited in the description**

- JP 2006228131 A
- JP 2006268703 A